## Europäisches Patentamt

## European Patent Office

## Office européen des brevets

(19)

(11) Veröffentlichungsnummer: **0 044 404**
**B1**

(12)

# EUROPÄISCHE PATENTSCHRIFT

(45) Veröffentlichungstag der Patentschrift:
**12.03.86**

(51) Int. Cl.⁴: **B 64 D 9/00**

(21) Anmeldenummer: **81104572.3**

(22) Anmeldetag: **13.06.81**

(54) Frachtladesystem für Grossraumflugzeuge.

(30) Priorität: **17.07.80 DE 3027160**

(43) Veröffentlichungstag der Anmeldung:
**27.01.82 Patentblatt 82/4**

(45) Bekanntmachung des Hinweises auf die Patenterteilung:
**12.03.86 Patentblatt 86/11**

(84) Benannte Vertragsstaaten:
**FR GB IT**

(56) Entgegenhaltungen:
**DE - A - 2 364 270**
**DE - A - 2 432 245**
**DE - B - 2 161 735**
**DE - B - 2 340 315**
**FR - A - 2 450 746**
**US - A - 3 810 534**
**US - A - 4 121 789**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Voigt, Werner, Am Öferl 11, D-8120 Weilheim (DE)**

## Beschreibung

Die Erfindung bezieht sich auf ein Frachtladesystem für Unterflurfrachträume in Grossraumflugzeugen zur Beladung mit Containern und Paletten, in dem jeweils ein Container- und Palettenriegel zwei Riegelklauen aufweist, die miteinander über einen Auslösehebel so in Wirkverbindung stehen, dass letzterer bei der Bewegung des Luftfrachtgutes in einer vorgegebenen Richtung eine Auslösung des Riegels bewirkt und bei der Bewegung in der Gegenrichtung eine Riegelauslösung vermieden wird, wobei die Riegelklauen über einen Fusshebel einschwenkbar angeordnet sind und die eine der Riegelklauen in der abgesenkten Stellung sperrbar ist.

Ein solches Frachtladesystem ist aus der DE-AS 2 432 245 der Anmelderin bekannt geworden.

Der vorliegenden Erfindung liegt die Aufgabe zugrunde, diesen bekannten Riegel so auszubauen, dass das manuell bedienbare Ladesystem durch wahlweise Zuordnung elektrischer und elektronischer Bauteile für halb- oder vollautomatischen Betrieb umrüstbar ist, ohne dass die mechanischen Riegelkomponenten konstruktionsmässig und funktionell verändert werden müssen.

Diese Aufgabe wird durch die im Anspruch 1 niedergelegten Massnahmen gelöst. Im Unteranspruch ist eine vorteilhafte Ausgestaltung aufgezeigt und in der nachfolgenden Beschreibung wird ein Ausführungsbeispiel erläutert, das in den Figuren der Zeichnung dargestellt ist. Es zeigen

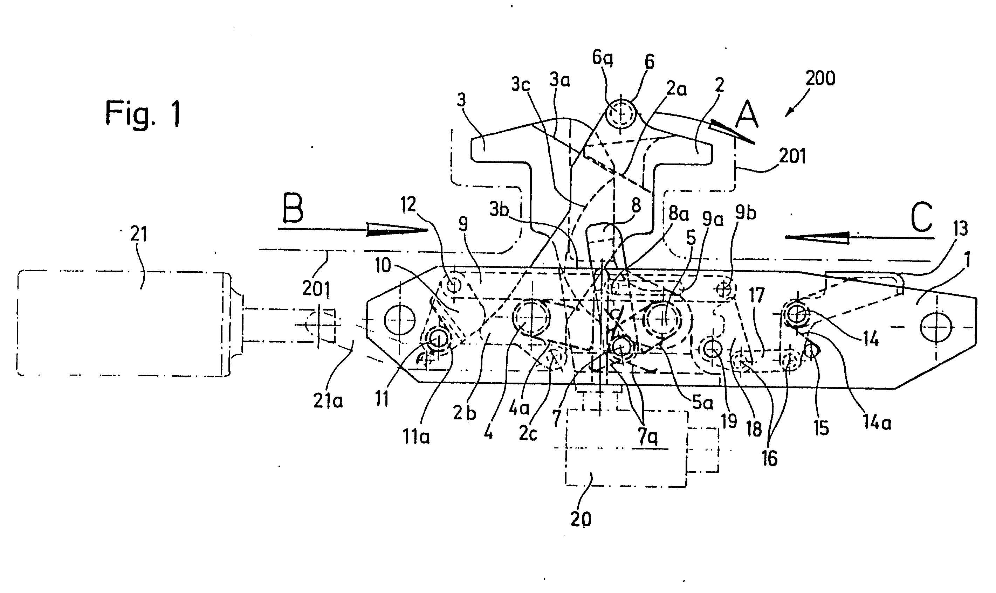

Fig. 1 eine Seitenansicht der Verriegelung in der verriegelten Position,

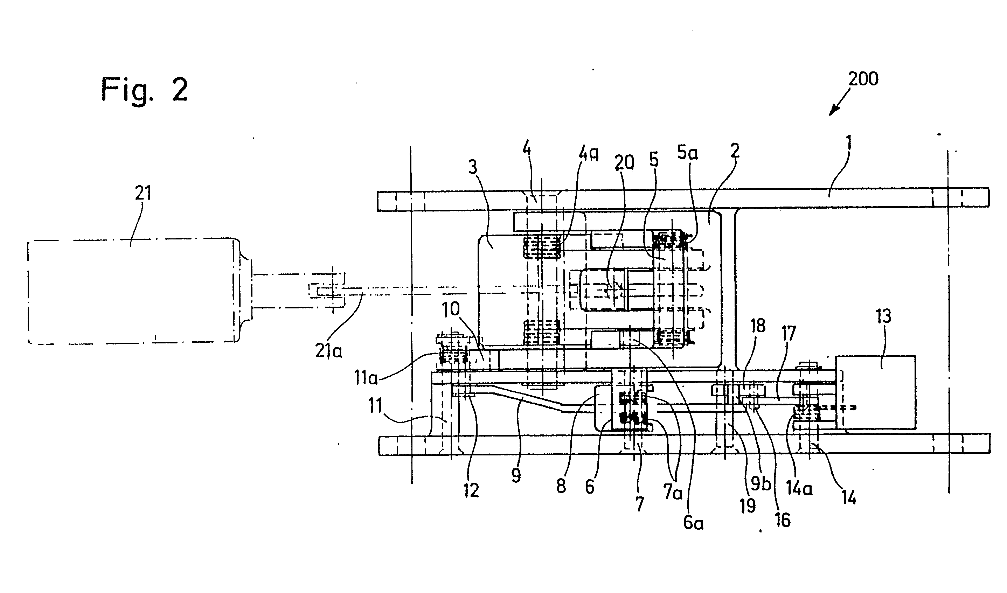

Fig. 2 eine Draufsicht gemäss Fig. 1,

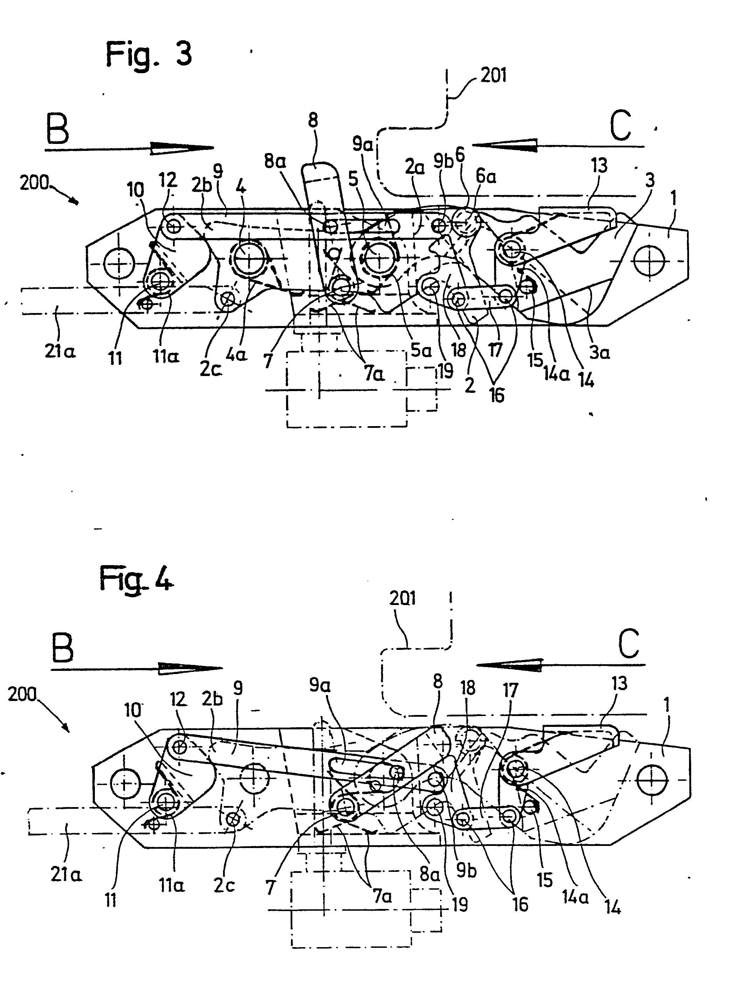

Fig. 3 eine Seitenansicht der Verriegelung in abgesenkter Stellung,

Fig. 4 eine Seitenansicht der Verriegelung in Wartestellung.

Die vorgeschlagene Verriegelung als sogenannter Container- u. Palettenriegel 200 besteht aus einem Gehäuse 1, den Riegelklauen 2, 3, die über die Bolzen 4, 5 drehbar gelagert mit dem Gehäuse 1 verbunden sind. Über die Keilflächen 2a, 3a dieser Riegelklauen sowie die Gehäuseauflage 3b werden die Riegelklauen 2, 3 in der aufgerichteten Position verriegelt und von den Drehfedern 4a, 5a auch in dieser Stellung gehalten. Der seitlich an der Riegelklaue 2 angeordnete Fusshebel 6 ist zum Absenken des Riegels für den Beladevorgang. Auf der Achse 7 ist der Auslösehebel 8 mit den beiden Drehfedern 7a schwenkbar gelagert und mit dem Bolzen 8a über die Schubstange 9 mit dem Haltenocken 10 verbunden. Die Schubstange 9 besitzt ein Langloch 9a und einen Haltebolzen 9b. Der Haltenocken 10 ist auf der Welle 11 drehbar gelagert und mit dem Bolzen 12 über die Schubstange 9 mit dem Auslösehebel 8 gelenkig verbunden. Durch die Drehfeder 11a wird der Haltenocken 10 gegen die Nase 2b der Riegelklaue 2 gedrückt. Die Fusstaste 13 ist auf der Achse 14 drehbar gelagert und wird durch die Feder 14a gegen den Anschlag 15 gedrückt. Über die Bolzen 16 und den Verbindungshebel 17 ist die Fusstaste 13 mit dem Hakenhebel 18 verbunden, der auf dem Bolzen 19 drehbar angeordnet ist.

Für die Halbautomatik wird ein Endschalter 20 und für die Vollautomatik ein Hubmagnet 21 eingebaut, der über die Zugstange 21a in den Verbindungsbolzen 2c der Riegelklaue 2 eingehängt wird und die Betätigung der Fusstaste 6 ersetzt. Diese elektrischen Bauteile sind ohne Änderung der Mechanik einbaubar.

Die vorgeschlagene Ausführungsform funktioniert wie folgt: Wird der Container- oder Plattenriegel 200 mit dem Fusshebel 6 in Pfeilrichtung A nach unten gedrückt, schwenkt die Riegelklaue 2 um den Drehpunkt 4 nach unten und spannt dabei die Drehfeder 4a. Die relativ schwache, vorgespannte Drehfeder 5a bewegt die Riegelklaue 3 um den Bolzen 5, läuft also in der Richtung der Riegelklaue 2 nach. Dabei rollt sich die Rolle 6a an der Kulisse 3c der Riegelklaue 3 ab. Die Nase 2b der Riegelklaue 2 schwenkt nach oben und drückt den Haltenocken 10, der auf der Welle 11 gelagert ist, nach hinten.

Die Schubstange 9 wird ebenfalls nach hinten gezogen und gleitet dabei im Langloch 9a auf dem Bolzen 8a des Auslösehebels 8. Hat die Riegelklaue 2 die abgesenkte Position erreicht, so schwenkt der Haltenocken 10 unter Federspannung von 11a um die Welle 11 unter die Nase 2b der Riegelklaue 2. Damit ist der Riegel abgesenkt und das Luftfrachtgut kann entladen werden.

Beim Entladen wird der Auslösehebel 8 vom Luftfrachtgut 201 bzw. Container oder Palette in Pfeilrichtung B bewegt. Dabei verschiebt sich der Bolzen 8a des Auslösehebels 8 im Langloch 9a der Schubstange 9 nach hinten. Es erfolgt somit keine Auslösung des Riegels beim Entladen.

Beim Beladen aber wird der Auslösehebel 8 vom Luftfrachtgut 201 in Pfeilrichtung C bewegt. Dabei drückt der Bolzen 8a des Auslösehebels 8 die Schubstange 9 gegen den Bolzen 12 und dreht somit den Haltenocken 10 um die Welle 11 aus der Verriegelungsstellung. Die vorgespannte Drehfeder 4a schwenkt die Riegelklaue 2 um den Bolzen 4 nach oben. Hierbei drückt die Rolle 6a, die an der Kulisse 3c der Riegelklaue 3 entlang läuft, letztere ebenfalls nach oben. Über die Keilflächen 2a, 3a sowie die Gehäuseauflage 3b werden die Riegelklauen 2, 3 in der aufgerichteten Position verriegelt. Das Luftfrachtgut ist somit am Stellplatz gehalten.

Soll der Riegel für gewisse Ladeoperationen abgesenkt in Wartestellung verbleiben, so ist nach dem Absenken des Riegels über den Fusshebel 6 durch Herunterschwenken des Auslösehebels 8 in Pfeilrichtung B eine Auslösesperre möglich. Dabei gleitet der Bolzen 8a im Langloch 9a der Schubstange 9 und drückt dieselbe nach unten bis der Haltebolzen 9b in den Hakenhebel 18 einrastet. Der Auslösehebel 8 ist von dem Luftfrachtgut 201 nicht mehr erreichbar, und damit bleibt die Verriegelung in der abgesenkten Position.

Durch Betätigung der Fusstaste 13 wird über den Verbindungshebel 17 der Hakenhebel 18 um den Bolzen 19 ausgeschwenkt und gibt den Haltebolzen 9b frei. Die Drehfeder 7a schwenkt den Auslösehebel 8 um die Achse 7 in die Arbeitsstellung zurück. Durch die beiden gegenläufigen Drehfedern 7a wird der Auslösehebel 8 in der Arbeitsstellung gehalten.

**Patentansprüche**

1. Frachtladesystem für Unterfluchtfrachträume in Grossraumflugzeugen zur Beladung mit Containern und Paletten, in dem jeweils ein Container- und Palettenriegel (200) zwei Riegelklauen (2, 3) aufweist, die miteinander über einen Auslösehebel so in Wirkverbindung stehen, dass letzterer bei der Bewegung des Luftfrachtgutes in einer vorgegebenen Richtung eine Auslösung des Riegels bewirkt und bei der Bewegung in der Gegenrichtung eine Riegelauslösung vermieden wird, wobei die Riegelklauen über einen Fusshebel (6) einschwenkbar angeordnet sind und die eine der Riegelklauen (2) in der abgesenkten Stellung sperrbar ist, dadurch gekennzeichnet, dass zum Ersatz der Betätigung der Riegelklauen (2, 3) durch den Fusshebel (6) ein Hubmagnet (21) vorgesehen ist, der über eine Zugstange (21a) und einen Verbindungsbolzen (2c) an einen Ansatz der sperrbaren Riegelklaue (2) anlenkbar ist.

2. Frachtladesystem nach Anspruch 1, dadurch gekennzeichnet, dass die sperrbare Riegelklaue (2) mit einer Nase (2b) zur Betätigung eines Haltenockens (10) versehen ist, der sie in abgesenkter Stellung sperrt.

**Claims**

1. A freight loading system for underfloor freight compartments in large-capacity aircraft for loading with containers and pallets, in which in each case a container and pallet bolt (200) has two bolt locking claws (2, 3) which stand in operative connection with one another by way of a release lever in such a way that the latter, upon the movement of the air freight goods in a predetermined direction, brings about release of the bolt and upon the movement in the opposite direction bolt release is avoided, in which the bolt claws are arranged so that they can be swung in by way of a foot lever (6) and the one of the bolt claws (2) is blockable in the lowered position, characterised in that provided for the replacement of the actuation of the bolt claws (2, 3) by the foot lever (6) is a lifting magnet (21) which can be pivoted by way of a traction rod (21a) and a connecting pin (2c) to an extension of the blockable bolt claw (2).

2. A freight loading system according to claim 1, characterised in that the blockable bolt claw (2) is provided with a nose (2b) for the actuation of a retaining dog (10) which blocks it in the lowered position.

**Revendications**

1. Système de chargement de fret à conteneurs et à palettes pour soutes de ponts inférieurs d'avions de grande capacité, dans lequel chaque verrou de conteneurs et de palettes (200) comporte deux griffes (2, 3) mécaniquement raccordées l'une à l'autre par un levier de déclenchement de manière que ce dernier, lors du déplacement de la cargaison dans un sens prédéterminé, provoque un déclenchement du verrou et, lors d'un déplacement dans le sens opposé, empêche un déclenchement du verrou, les griffes du verrou pouvant être pivotées au moyen d'une pédale (6) et l'une des griffes (2) bloquée à la position abaissée, caractérisé par le fait qu'en remplacement de l'actionnement des griffes (2, 3) du verrou au moyen de la pédale (6), il est prévu un aimant de levage (21) qui, par l'intermédiaire d'une tige de traction (21a) et d'une cheville de raccordement (2c), s'articule sur un appendice de la griffe blocable (2) du verrou.

2. Système de chargement de fret selon la revendication 1, caractérisé par le fait que la griffe blocable (2) du verrou est munie d'un talon (2b) pour l'actionnement d'une came d'arrêt (10) qui la bloque en position abaissée.

Fig. 1

0 044 404

Fig. 2

0 044 404

# Fig. 3

# Fig. 4